Europäisches Patentamt

European Patent Office

Office européen des brevets

(19)

(11) Veröffentlichungsnummer: **0 203 424 B1**

# EUROPÄISCHE PATENTSCHRIFT

(12)

(45) Veröffentlichungstag der Patentschrift: **13.11.91**

(21) Anmeldenummer: **86106226.3**

(22) Anmeldetag: **06.05.86**

(51) Int. Cl.5: **H04L 12/22**, H04L 12/54, H04L 9/00

(54) Verfahren und Schaltungsanordnung zum Überprüfen der Berechtigung des Zugangs zu einem Signalverarbeitungssystem.

(30) Priorität: **28.05.85 DE 3519049**
**11.03.86 DE 3608028**

(43) Veröffentlichungstag der Anmeldung:
**03.12.86 Patentblatt 86/49**

(45) Bekanntmachung des Hinweises auf die
Patenterteilung:
**13.11.91 Patentblatt 91/46**

(84) Benannte Vertragsstaaten:
**AT BE CH DE FR GB IT LI NL SE**

(56) Entgegenhaltungen:
**DE-A- 3 329 571**
**LU-A- 81 654**
**US-A- 4 408 203**

**NACHRICHTEN ELEKTRONIK, Band 36, Nr. 7,
Juli 1982, Seiten 305-311, Heidelberg, DE; W.
TIETZ: "Neue Wege der Datenkommunikation
- Der paketvermittelte Datexdienst DATEX-P -
Teil 2"**

(73) Patentinhaber: **SIEMENS AKTIENGESELL-
SCHAFT**
**Wittelsbacherplatz 2**
**W-8000 München 2(DE)**

(72) Erfinder: **Wurzenberger, Johann Franz, Ing.
grad.**
**Vorderrisstrasse 14a**
**W-8000 München 82(DE)**

## Beschreibung

Die Erfindung betrifft ein Verfahren und eine Schaltungsanordnung zum Überprüfen der Berechtigung des Zugangs zu einem Signalverarbeitungssystem von mit diesem verbundenen, für die Abgabe und gegebenenfalls auch für die Aufnahme von Signalen ausgelegten peripheren Einrichtungen her anhand einer der jeweiligen peripheren Einrichtung zugewiesenen Kennzahl und einer für die jeweilige periphere Einrichtung frei wählbaren Identifizierungsinformation.

In Signalverarbeitungssystemen, auf die von peripheren Einrichtungen her zugegriffen werden kann, sind häufig Einrichtungen vorgesehen, die bei einem beabsichtigten Zugriff von einer mit ihnen verbundenen peripheren Einrichtung aus zunächst die Zugangsberechtigung bezüglich der betreffenden peripheren Einrichtung überprüfen. Beispiele für derartige Signalverarbeitungssysteme sind private und öffentliche Nachrichtenübertragungssysteme sowie Datenverarbeitungssysteme, durch welche externen Teilnehmern bestimmte Dienste angeboten werden. Für eine Überprüfung der Zugangsberechtigung kann nun beispielsweise, wie bereits im Zusammenhang mit der Teilnehmererkennung durch ein Bildschirmtextsystem bekannt (DE-OS 2842777), so vorgegangen sein, daß jede der peripheren Einrichtungen eine bestimmte Kennzahl, z.B. eine bestimmte Rufnummer, zugewiesen wird, die bei einem beabsichtigten Zugriff von einer der peripheren Einrichtungen aus zusammen mit einem für die betreffende periphere Einrichtung frei wählbaren Identifizierungsinformation zu dem Signalverarbeitungssystem hin zu übertragen ist. Eine Überprüfung der Zugangsberechtigung anhand einer solchen Kennzahl und einer dieser zugehörigen Identifizierungsinformation bringt jedoch den Nachteil mit sich, daß Verfälschungen von Kennzahlen und zugehörigen Identifizierungsinformationen, insbesondere durch Manipulation, nicht auszuschließen sind.

Es ist nun Aufgabe der vorliegenden Erfindung, einen Weg zu zeigen, wie bei einem Verfahren und einer Schaltungsanordnung der eingangs genannten Art eine weitgehend sichere Überprüfung der Zugangsberechtigung von peripheren Einrichtungen möglich ist.

Gelöst wird die vorstehend aufgezeigte Aufgabe bei einem Verfahren und einer Schaltungsanordnung der eingangs genannten Art erfindungsgemäß dadurch, daß für jede der peripheren Einrichtungen in dem Signalverarbeitungssystem ein Schlüsselwort hinterlegt wird, welches jeweils aus der genannten Kennzahl und der Identifizierungsinformation der jeweiligen peripheren Einrichtung abgeleitet wird und daß bei einem beabsichtigten Zugang von einer der peripheren Einrichtungen her zunächst die von dieser dafür abgegebene Kennzahl und die dieser zugehörige Identifizierungsinformation mit dem der betreffenden peripheren Einrichtung zugeordneten Schlüsselwort verknüpft werden.

Die Erfindung bringt den Vorteil mit sich, daß durch die Verknüpfung von mehreren Informationen, nämlich Kennzahl, Identifizierungsinformation und Schlüsselwort, eine Überprüfung der Zugangsberechtigung mit hoher Sicherheit erfolgen kann. Die Sicherheit wird insbesondere dadurch erreicht, daß zwei der zu verknüpfenden Informationen nicht gleichzeitig den Benutzern bzw. dem Bedienpersonal des Signalverarbeitungssystems zugänglich sind. So sind in dem Signalverarbeitungssystem lediglich die den einzelnen peripheren Einrichtungen zugeordneten Schlüsselwörter hinterlegt. Die Vorgehensweise bei der Ermittlung dieser Schlüsselwörter ist dabei weder den Benutzern noch dem Bedienpersonal des Signalverarbeitungssystems bekannt. Die Identifizierungsinformationen werden schließlich von den Benutzern des Signalverarbeitungssystems bei der Inbetriebnahme einer peripheren Einrichtung frei wählbar festgesetzt und sind in dem zugehörigen Signalverarbeitungssystem nicht hinterlegt.

Das Verfahren gemäß der vorliegenden Erfindung läßt sich in vorteilhafter Weise auch zum Überprüfen der Berechtigung eines Zugriffs von einer Bedienungsstation des Signalverarbeitungssystems aus auf in diesem gespeicherte Dateninformationen dadurch anwenden, daß vor einem Zugriff auf solche Dateninformationen die Zugriffsberechtigung anhand einer der betreffenden Bedienungsstation zugeteilten Kennzahl, einer für die betreffende Bedienungsstation frei gewählten Identifizierungsinformation und eines in dem Signalverarbeitungssystem für die betreffende Bedienungsstation hinterlegten Schlüsselwortes überprüft wird.

Darüber hinaus läßt sich das Verfahren gemäß der vorliegenden Erfindung in vorteilhafter Weise auch zum Überprüfen der Berechtigung der Aktivierung von den Betrieb eines Signalverarbeitungssystems betreffenden Steuerungsabläufen von einer Bedienungsstation dieses Signalverarbeitungssystems aus dadurch anwenden, daß vor einer Aktivierung von Steuerungsabläufen die Berechtigung bezüglich der betreffenden Bedienungsstation anhand einer dieser zugeteilten Kennzahl, einer für die betreffende Bedienungsstation frei wählbaren Identifizierungsinformation und eines in dem Signalverarbeitungssystem für die betreffende Bedienungsstation hinterlegten Schlüsselwort überprüft wird.

Bei den zuvor genannten beiden Anwendungsfällen liegt der Vorteil der Erfindung darin, daß nur ein zugangsberechtigter Personenkreis des Bedienpersonals des Signalverarbeitungssystems Zugang zu in dem Signalverarbeitungssystem gespeicherten Dateninformationen erhält bzw. berechtigt ist, bestimmte den Betrieb des Signalverarbeitungssystems betreffende Steuerungsabläufe zu aktivieren.

In die Ableitung der Schlüsselwörter und in die Überprüfung der Zugangsberechtigung kann auch zusätzlich zu den genannten Kennzahlen und Identifizierungsinformationen eine für das jeweilige Signalverarbeitungssystem festgelegte Systemkennzahl einbezogen werden. Dies bringt den Vorteil einer weiteren Erhöhung der Sicherheit bei der Überprüfung der Zugangsberechtigung zu einem Signalverarbeitungssystem mit sich.

Weiterhin ist das Verfahren gemäß der vorliegenden Anmeldung in vorteilhafter Weise anwendbar zur Identifizierung von in über eine Paketvermittlungsstelle eines Paketvermittlungsnetzes verlaufende Verbindungen einbezogenen rufenden und/oder gerufenen Teilnehmerstellen in der betreffenden Paketvermittlungsstelle. Eine solche Identifizierung erfolgt dabei in der Weise, daß für jede der mit der Paketvermittlungsstelle über einen Übertragungskanal in Verbindung stehende Teilnehmerstelle in der Paketvermittlungsstelle bei Inbetriebnahme des jeweiligen Übertragungskanals ein Schlüsselwort hinterlegt wird, welches in der Paketvermittlungsstelle aus der genannten, freiwählbaren Identifizierungsinformation und der der jeweiligen Teilnehmerstelle zugewiesenen Rufnummer abgeleitet wird, daß im Zuge des Aufbaues einer Verbindung in einem diesen Aufbau einleitenden Paket zusätzlich zu der jeweiligen Identifizierungsinformationen die der jeweiligen Teilnehmerstelle zugewiesene Rufnummer übertragen wird und daß die übertragene Rufnummer und die zugehörige Identifizierungsinformation jeweils mit dem der jeweiligen Teilnehmerstelle zugeordneten Schlüsselwort für eine Identifizierung verknüpft werden.

Vorzugsweise wird ein eingeleiteter Verbindungsaufbau lediglich bei einer fehlerfreien Identifizierung der jeweils rufenden und/oder gerufenen Teilnehmerstelle fortgesetzt. Dies bringt den Vorteil mit sich, daß einerseits Vermittlungsvorgänge in einer Paketvermittlungsstelle nur dann abgewickelt werden, wenn die jeweilige rufende und/oder gerufene Teilnehmerstelle für eine spätere Gebührenerhebung ermittelt werden konnte. Andererseits bietet sich aber auch die Möglichkeit, beispielsweise durch Löschen von Schlüsselwörtern bestimmte Teilnehmerstellen für den Aufbau von Verbindungen zu sperren. In der jeweiligen Paketvermittlungsstelle erübrigt sich somit das Anlegen von gesonderten Listen mit den gesperrten Teilnehmerstellen in der Paketvermittlungsstelle.

Zweckmäßigerweise wird bei Teilnehmerstellen, die über eine private Nebenstellenanlage mit der Paketvermittlungsstelle in Verbindung stehen, für jede dieser Teilnehmerstellen vom Betreiber der Nebenstellenanlage eine gesonderte Identifizierungsinformation gewählt. Damit ist es in einfacher Weise möglich, für die einzelnen Teilnehmerstellen der Nebenstellenanlage eine gesonderte Gebührenerfassung durchzuführen.

Können von den einzelnen Teilnehmerstellen verschiedene, von den Betreibern der Vermittlungsnetze zur Verfügung gestellte Dienste wahlweise in Anspruch genommen werden, so ist es zweckmäßig, daß in einem Paket für die Einleitung des Aufbaus einer Verbindung auch Dienste anfordernde Informationssignale übertragen werden, welche nach einer Identifizierung der jeweiligen Teilnehmerstelle als aktuelle Parameter übernommen werden. Dies bringt den Vorteil mit sich, daß die von den Betreibern der Vermittlungsnetze zur Verfügung gestellten Dienste tatsächlich nur von einem berechtigten Teilnehmerkreis in Anspruch genommen werden können.

Eine Schaltungsanordnung zur Durchführung des Verfahrens gemäß der vorliegenden Erfindung läßt sich dadurch mit einem relativ geringen schaltungstechnischen Aufwand realisieren, daß dem Signalverarbeitungssystem eine Speicheranordnung mit einer der Anzahl der peripheren Einrichtungen entsprechenden Anzahl von Speicherzellen für die Speicherung der den peripheren Einrichtungen jeweils zugeordneten Schlüsselwörter zugehörig ist, daß ein erstes Register für die Zwischenspeicherung einer von einer der peripheren Einrichtungen abgegebenen Kennzahl und ein zweites Register für die Zwischenspeicherung der der betreffenden Kennzahl zugehörigen Identifizierungsinformation vorgesehen sind und daß mit den genannten Registern und der Speicheranordnung eine Verknüpfungsschaltung verbunden ist, welche ihr von den beiden Registern her zugeführte Kennzahlen und diesen zugehörige Identifizierungsinformationen mit den Kennzahlen jeweils entsprechenden Schlüsselwörtern verknüpft.

Anhand von Zeichnungen wird die Erfindung nachstehend beispielsweise näher erläutert.

Figur 1    zeigt in einem Blockschaltbild ein Signalverarbeitungssystem, bei dem die Erfindung angewandt ist,

Figur 2    zeigt den Aufbau einer in Figur 1 lediglich schematisch dargestellten Identifizierungsanordnung und

Figur 3    zeigt einen möglichen Aufbau einer in der Identifizierungsanordnung gemäß Figur 2 vorgesehenen Verknüpfungsschaltung.

Figur 4    zeigt in einem Blockschaltbild ein Paketvermittlungsnetz als weiteren Anwendungsfall für die vorliegende Erfindung.

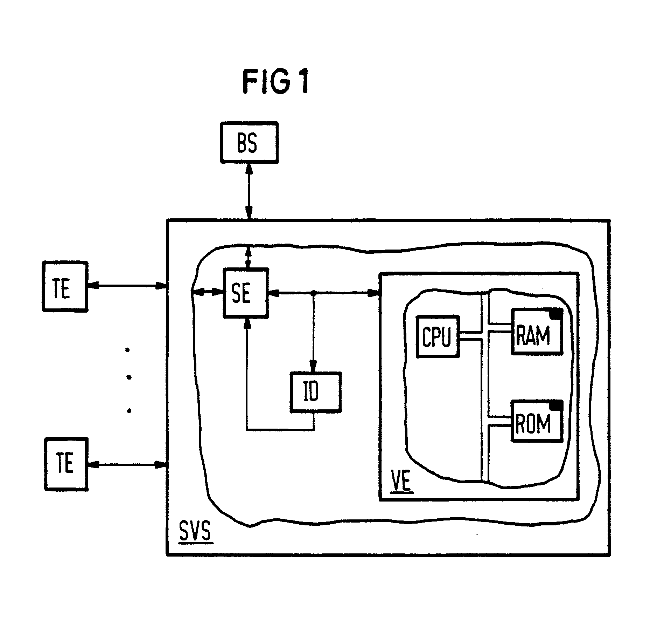

In Figur 1 ist ausschnittweise ein Signalverarbeitungssystem SVS dargestellt. Bei diesem System kann es sich beispielsweise um ein Nachrichtenübertragungssystem eines privaten oder öffentlichen Übertragungsnetzes handeln. Dieses System kann jedoch auch ein Datenverarbeitungssystem bilden, auf welches externe Benutzer für die Inanspruchnahme bestimmter, auf dem Gebiet der Datenverarbeitung liegender Dienste zugreifen können. Mit dem Signalverarbeitungssystem ist eine Vielzahl von peripheren Einrichtungen TE angeschlossen. Diese mögen je nach der Art des zugehörigen Signalverarbeitungssystems aus herkömmlichen Datenendeinrichtungen für die Aufnahme und/oder Abgabe von Datensignalen ausgebildet sein. Darüber hinaus ist mit dem Signalverarbeitungssystem SVS als weitere periphere Einrichtung eine mit BS bezeichnete Bedienungsstation verbunden, über welche Bedienpersonal zum Zwecke der Wartung und Bedienung Zugang zu dem Signalverarbeitungssystem erhält.

Von dem Signalverarbeitungssystem SVS ist in Figur 1 eine zentrale, der Signalverarbeitung dienende Verarbeitungseinheit VE dargestellt. Von dieser sind dabei lediglich eine zentrale Steuereinheit CPU und eine mit dieser über ein Busleitungssystem verbundene, aus Festwertspeichern ROM und Schreib-/Lese-Speichern RAM bestehende Speichereinheit angedeutet. Mit dieser Verarbeitungseinheit VE ist eine Sende-/Empfangsanordnung SE verbunden, über die die genannten peripheren Einrichtungen TE und die Bedienungsstation BS Zugang zu der Verarbeitungseinheit erhalten. Mit der Verarbeitungseinheit und der Sende-/Empfangsanordnung ist schließlich noch eine Identifizierungsanordnung ID mit ihrem Eingang verbunden. Der Ausgang dieser Identifizierungsanordnung ist an einen Steuereingang der Sende-/Empfangsanordnung angeschlossen.

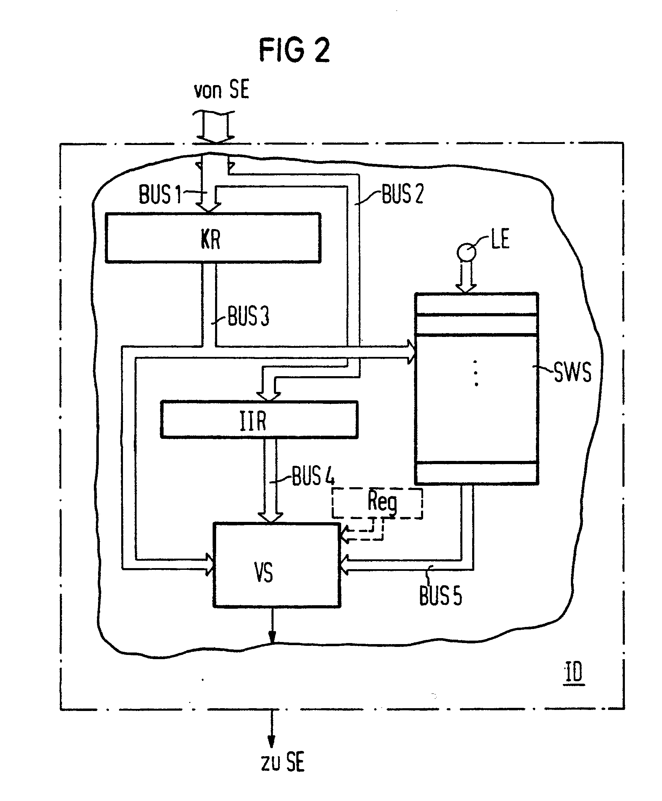

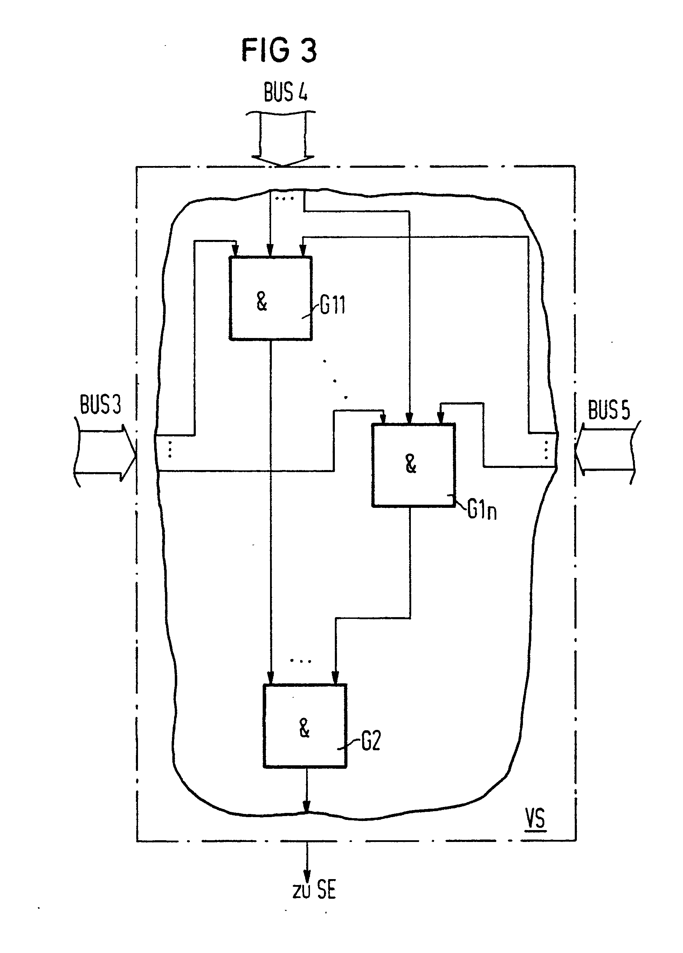

Im folgenden wird nun unter Bezugnahme auf die Figuren 2 und 3 das Verfahren zum Überprüfen der Berechtigung des Zugangs zu dem Signalverarbeitungssystem SVS näher beschrieben.

Jeder der peripheren Einrichtungen TE und der Bedienungsstation BS wird von dem Signalverarbeitungssystem her eine gesonderte Kennzahl, im Falle eines Übertragungssystems eine Rufnummer, zugewiesen. Bei Inbetriebnahme des Signalverarbeitungssystems wird für jede der peripheren Einrichtungen und die Bedienungsstation anhand der jeweiligen zugewiesenen Kennzahl und einer durch den Benutzer der jeweiligen peripheren Einrichtung bzw. der Bedienungsstation frei wählbaren, eine Zeichenfolge darstellenden Identifizierungsinformation ein Schlüsselwort nach einer festgelegten arithmetischen Operation gebildet. Dieses Schlüsselwort wird in einem in Figur 2 mit SWS bezeichneten Speicher der Identifizierungsanordnung ID für die Dauer des Anschlusses der jeweiligen peripheren Einrichtung bzw. der Bedienungsstation an das Signalverarbeitungssystem bzw. bis zur Neufestlegung eines Schlüsselwortes gespeichert. Dieser Speicher weist für die Aufnahme von Schlüsselwörtern einen Lageeingang LE auf und ist so organisiert, daß für jede der peripheren Einrichtungen TE und die Bedienungsstation BS eine Speicherzelle für die Aufnahme eines Schlüsselwortes reserviert ist. Die für die Ermittlung der einzelnen Schlüsselwörter festgelegte arithmetische Operation ist im übrigen weder den Benutzern noch dem Bedienpersonal des Signalverarbeitungssystems bekannt. Darüber hinaus sind dem Bedienpersonal die von den Benutzern festgelegten Identifizierungsinformationen nicht zugänglich. Im Falle der Bedienungsstation ist die festgelegte Identifizierungsinformation nur einem zugangsberechtigten Personenkreis bekannt.

Ist nun beispielsweise ein Zugang zu dem Signalverarbeitungssystem SVS von einer der peripheren Einrichtungen her beabsichtigt, so wird die jeweilige periphere Einrichtung zur Abgabe der ihr zugewiesenen Kennziffer und der dieser zugehörigen Identifizierungsinformation aufgefordert. Für die Zwischenspeicherung dieser Angaben sind in der in Figur 2 dargestellten Identifizierungsanordnung ID zwei gesonderte Register vorgesehen, nämlich ein Kennzahl-Register KR und ein Identifizierungsinformations-Register IIR, die die genannten Angaben über ein Leitungssystem BUS1 bzw. BUS2 von der Sende-/Empfangsanordnung SE her zugeführt erhalten.

Mit Hilfe der in dem Register KR zwischengespeicherten Kennzahl wird nun der bereits erwähnte Speicher SWS über ein Leitungssystem BUS3 für das Auslesen des in ihm für die durch diese Kennzahl bezeichnete periphere Einrichtung gespeicherten Schlüsselwortes angesteuert. Mit diesem ausgelesenen Schlüsselwort, das auf einem Leitungssystem BUS5 auftritt und den in den Registern KR und IIR gespeicherten Angaben, die einerseits auf dem bereits genannten Leitungssystem BUS3 und andererseits auf einem Leitungssystem BUS4 bereitgestellt werden, wird anschließend eine in Figur 2 mit VS bezeichnete Verknüpfungsschaltung beaufschlagt. Diese unterwirft die ihr als Eingangsgrößen zugeführten Eingangssignale einer festgelegten binären arithmetischen Operation. Das am Ausgang der Verknüpfungsschaltung auftretende binäre Ausgangssignal gibt dabei Aufschluß über das Ergebnis der Überprüfung der Zugangsberechtigung für die in Frage kommende periphere Einrichtung. Entspricht z.B. das Ausgangssignal einem festgelegten Erwartungswert, so ist die in Frage kommende periphere Einrichtung zum Zugang zu dem Signalverarbeitungssystem SVS berechtigt.

Als arithmetische Operationen für die Festlegung der Schlüsselwörter und für die mit Hilfe der Verknüpfungsschaltung VS durchzuführende Überprüfung der Zugangsberechtigung können im übrigen je nach der geforderten Sicherheit für diese Überprüfung beliebige binäre arithmetische Verknüpfungen vorgesehen werden. Die beiden vorgesehenen arithmetischen Verknüpfungen müssen lediglich so aufeinander abgestimmt sein, daß sich bei einer fehlerfreien Überprüfung einer Zugangsberechtigung am Ausgang der Verknüpfungsschaltung ein vorgegebener Erwartungswert einstellen kann. Ein Beispiel für eine mögliche Realisierung der Verknüpfungsschaltung VS ist in Figur 3 dargestellt. Danach weist die Verknüpfungsschaltung eine der Anzahl der den Eingangssignalen jeweils zugehörigen Informationsbits entsprechende Anzahl von UND-Gliedern G11 bis G1n auf. Diese UND-Glieder sind jeweils mit drei Eingängen ausgebildet, über die sie mit einander entsprechende Informationsbits führenden Leitungen der Leitungssysteme BUS3, BUS4 und BUS5 in Verbindung stehen. Die Ausgangssignale der UND-Glieder G11 bis G1n werden einem weiteren UND-Glied zugeführt, welches dafür über eine der Anzahl dieser UND-Glieder entsprechende Anzahl von Eingängen verfügt. Der Ausgang dieses UND-Gliedes bildet den Ausgang der Verknüpfungsschaltung VS.

Der zuvor beschriebene beabsichtigte Zugang zu dem Signalverarbeitungssystem SVS von einer der peripheren Einrichtungen her wird lediglich bei einer fehlerfreien Überprüfung der Zugangsberechtigung, die der Sende-/Empfangseinrichtung SE von der in Figur 2 dargestellten Verknüpfungsschaltung VS her angezeigt wird, zugelassen.

Vorstehend wurde die Überprüfung der Zugangsberechtigung am Beispiel einer peripheren Einrichtung TE erläutert. Den erläuterten Verfahrensschritten entsprechende Verfahrensschritte laufen aber auch dann ab, wenn ein Zugang zu dem Signalverarbeitungssystem von der Bedienungsstation BS her beabsichtigt ist. Ein derartiger Zugang kann beispielsweise für Wartungs- und Bedienungszwecke erforderlich sein. Dabei ist durch die vorstehend erläuterte Überprüfung der Zugangsberechtigung sichergestellt, daß lediglich ein ausgewählter Personenkreis auf in dem Signalverarbeitungssystem gespeicherte Dateninformationen zugreifen bzw. bestimmte für den Betrieb des Signalverarbeitungssystems erforderliche Steuerungsvorgänge aktivieren kann.

Im übrigen sei noch darauf hingewiesen, daß für eine weitere Erhöhung der Sicherheit bei der Überprüfung der Zugangsberechtigung zusätzlich jedem Signalverarbeitungssystem eine gesonderte Systemkennzahl zugeordnet werden kann, welche jeweils in die oben genannten aufeinander abgestimmten arithmetischen Operationen für die Bildung der Schlüsselwörter und für die mit Hilfe der Verknüpfungsschaltung VS durchzuführende Überprüfung der Zugangsberechtigung als weitere Eingangsgröße einbezogen wird. Dafür kann beispielsweise, wie in Fig. 2 dargestellt, die Identifizierungsanordnung ID ein zusätzliches, mit der Verknüpfungsschaltung VS in Verbindung stehendes Register Reg aufweisen, in welchem die Systemkennzahl gespeichert ist.

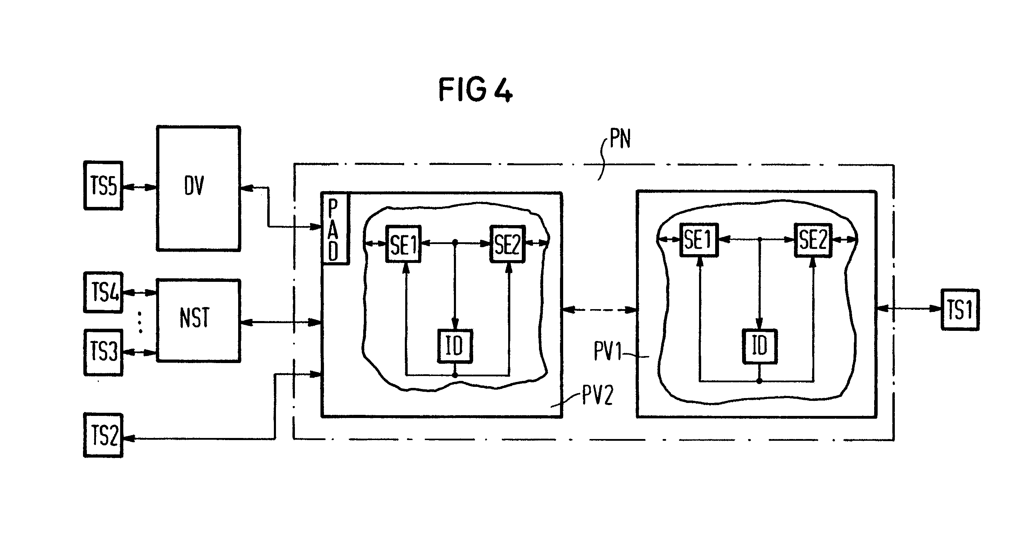

Das vorstehend erläuterte Verfahren zur Überprüfung der Zugangsberechtigung läßt sich auch in vorteilhafter Weise zur Identifizierung von in über eine Paketvermittlungsstelle eines Paketvermittlungsnetzes verlaufende Verbindungen einbezogenen rufenden und/oder gerufenen Teilnehmerstellen in der betreffenden Paketvermittlungsstelle anwenden. In Figur 4 ist ein derartiges Paketvermittlungsnetz schematisch dargestellt. Es ist mit PN bezeichnet. Dieses Paketvermittlungsnetz möge dabei beispielsweise aus den beiden über eine Übertragungsleitung miteinander in Verbindung stehenden Paketvermittlungsstellen PV1 und PV2 gebildet sein. An derartige Paketvermittlungsstellen ist im allgemeinen eine Vielzahl von Teilnehmerstellen anschließbar. In Figur 4 ist jedoch zur Vereinfachung lediglich der Anschluß einiger weniger Teilnehmerstellen angedeutet. So ist beispielsweise mit der Paketvermittlungsstelle PV1 lediglich eine mit TS1 bezeichnete Teilnehmerstelle verbunden. Bei dieser möge es sich um eine paketorientierte Teilnehmerstelle handeln, die eine Übertragung von Datensignalen gemäß CCITT-Empfehlung X.25 ermöglicht.

Mit der Paketvermittlungsstelle PV2 sind Teilnehmerstellen TS2 bis TS5 verbunden. Dabei ist die Teilnehmerstelle TS2 direkt mit der Paketvermittlungsstelle verbunden, d. h. auch hier liegt eine Teilnehmerstelle vor, die Datensignale in Paketform aufnehmen und abgeben kann. Die Teilnehmerstellen TS3 und TS4 sind über eine private Nebenstellenanlage NST an die Paketvermittlungsstelle PV2 angeschlossen. Diese Nebenstellenanlage möge dabei so ausgestaltet sein, daß ein Datensignalaustausch zwischen ihr und der zugehörigen Paketvermittlungsstelle in Form von Paketen erfolgen kann.

Mit der Paketvermittlungsstelle PV2 ist schließlich noch indirekt die Teilnehmerstelle TS5 verbunden. Diese Teilnehmerstelle ist an eine Durchschaltevermittlungsstelle DV eines Durchschaltevermittlungsnetzes angeschlossen. Bei dem Durchschaltevermittlungsnetz kann es sich dabei beispielsweise um ein Fernsprechnetz handeln. Da in einem solchen Fernsprechnetz die dem Verbindungsaufbau dienenden Signale und Datensignale nicht in Form von Paketen übertragen werden, ist eine direkte Übertragung dieser Signale zwischen der Durchschaltevermittlungsstelle DV und der Paketvermittlungsstelle PV2 nicht möglich. Vielmehr ist eine Signalumsetzung erforderlich. Hierfür weist die Paketvermittlungsstelle PV2 eine in Figur 4 mit PAD bezeichnete Umsetzeinrichtung auf. Diese Umsetzeinrichtung setzt bei einer Signalübertragung von der Durchschaltevermittlungsstelle zu der Paketvermittlungsstelle hin die z. B. zunächst im Start-Stop-Format übertragenen Signale in Pakete um. In entsprechender Weise erfolgt bei einer Signalübertragung in der Gegenrichtung eine Umsetzung von Paketen in Signale mit Start-Stop-Format. Die angegebenen Umsetzfunktionen werden im übrigen auch als Paketier-Entpaketier-Funktionen bezeichnet.

Unabhängig davon, welche der vorstehend angegebenen Anschlußarten im Einzelfall für den Anschluß von Teilnehmerstellen an eine Paketvermittlungsstelle zu verwenden ist, ist es beispielsweise für eine spätere Gebührenerfassung oder für eine Inanspruchnahme eines von dem Betreiber der Paketvermittlungsstelle zur Verfügung gestellten Dienstes, beispielsweise des Dienstes "Zuordnung zu einer geschlossenen Benutzerklasse", erforderlich, Teilnehmerstellen, von denen ein Verbindungsaufbau eingeleitet wird, in der Paketvermittlungsstelle eindeutig zu identifizieren. Für eine derartige Identifizierung weisen die beiden in Figur 4 dargestellten Paketvermittlungsstellen PV1 und PV2 jeweils eine bereits oben näher erläuterte Identifizierungsanordnung ID auf. Diese Identifizierungsanordnung steht eingangsseitig mit Sende-/Empfangseinrichtungen SE1 und SE2 in Verbindung, über die die jeweilige Paketvermittlungsstelle in Form von Paketen auftretende Datensignale aufnimmt bzw. abgibt. Ausgangsseitig ist die jeweilige Identifizierungsanordnung an Steuereingänge der ihr jeweils zugehörigen Sende-/Empfangseinrichtungen angeschlossen.

Bei der Inbetriebnahme eines Übertragungskanals einer Paketvermittlungsstelle, beispielsweise der in Figur 4 dargestellten Paketvermittlungsstelle PV2, für den Anschluß einer paketorientierten Teilnehmerstelle oder für den Anschluß einer Teilnehmerstelle über eine Umsetzeinrichtung wird anhand der für die betreffende Teilnehmerstelle festgelegten Rufnummer und einer durch den Benutzer der Teilnehmerstelle frei wählbaren Identifizierungsinformation in der oben bereits angegebenen Weise ein Schlüsselwort gebildet. Ein solches Schlüsselwort wird dabei in einem dem in Figur 2 dargestellten Speicher SWS entsprechenden Speicher der der betreffenden Paketvermittlungsstelle zugehörigen Identifizierungsanordnung ID für die Dauer des Bestehens des gerade in Betrieb genommenen Übertragungskanals bzw. bis zur Neufestlegung eines Schlüsselwortes gespeichert.

Ist nun beispielsweise von einer paketorientierten Teilnehmerstelle, z. B. der Teilnehmerstelle TS2 in Figur 4, eine Verbindung zu einer weiteren Teilnehmerstelle, die die in Figur 4 dargestellte Teilnehmerstelle TS1 sein möge, aufzubauen, so wird zunächst für die Einleitung des Verbindungsaufbaus ein Paket (Paket für einen ankommenden Ruf) von der rufenden Teilnehmerstelle TS2 übertragen. Dieses Paket enthält u. a. die eigene Rufnummer der Teilnehmerstelle TS2 und die ausgewählte Identifizierungsinformation. Anhand dieser Rufnummer und der Identifizierungsinformation erfolgt dann mit Hilfe der in den Figuren 2 und 4 dargestellten Identifizierungsanordnung ID eine Identifizierung der Teilnehmerstelle TS2 in der bereits im Zusammenhang mit der Überprüfung der Zugangsberechtigung zu einem Signalverarbeitungssystem erläuterten Weise.

Der von der Teilnehmerstelle TS2 eingeleitete Verbindungsaufbau wird lediglich bei einer fehlerfreien Identifizierung, die in diesem Falle der Sende-/Empfangseinrichtung SE1 von der in Figur 2 dargestellten Verknüpfungsschaltung VS her angezeigt wird, fortgesetzt. Damit ist beispielsweise sichergestellt, daß nur dann eine Verbindung zustande kommt, wenn die rufende Teilnehmerstelle für eine Gebührenerhebung identifizierbar ist. Andererseits wird die Tatsache, daß eine Verbindung nur bei einer fehlerfreien Identifizierung der rufenden Teilnehmerstelle vollständig aufgebaut wird, auch zum gezielten Sperren von Teilnehmerstellen für abgehende Rufe ausgenutzt. Denn es besteht hier die Möglichkeit, durch gezieltes Löschen von Schlüsselwörtern eine Sperre für die diesen Schlüsselwörtern zugeordneten Teilnehmerstellen herbeizuführen. Gesonderte Listen für für abgehende Rufe gesperrte Teilnehmerstellen sind somit nicht erforderlich.

Bei einer Fortsetzung eines Verbindungsaufbaues sind im übrigen zwischen den in Frage kommenden Teilnehmerstellen, hier der Teilnehmerstelle TS2, und der Paketvermittlungsstelle Pakete gemäß CCITT-Empfehlung X.25 auszutauschen. Auf diesen Austausch wird jedoch im folgenden nicht näher eingegangen.

Vorstehend wurde die Identifizierung einer rufenden Teilnehmerstelle lediglich am Beispiel der paketorientierten Teilnehmerstelle TS2 erläutert. Den erläuterten Verfahrensschritten entsprechende Verfahrensschritte laufen aber auch dann ab, wenn die zu identifizierenden Teilnehmerstellen beispielsweise über eine Umsetzeinrichtung (PAD in Figur 4) mit der Paketvermittlungsstelle in Verbindung stehen. In diesem Falle erfolgt eine sogenannte Zweistufenwahl. Die erste Stufe besteht dabei in der Abgabe einer Zugangsziffer für das Paketvermittlungsnetz. Danach wird als zweite Stufe eine für das Paketvermittlungsnetz vorgesehene Wahlprozedur abgewickelt. Für diese Abwicklung werden beispielsweise von einer nach einem asynchronen Übertragungsverfahren arbeitenden Teilnehmerstelle als Wahlinformationen die eigene Rufnummer, die gewählte Identifizierungsinformation und die Rufnummer der gerufenen Teilnehmerstelle in Form von Start-Stop-Signalen abgegeben und in der Umsetzeinrichtung PAD in ein entsprechendes Paket eingefügt.

Schließlich wurde vorstehend auch bereits darauf hingewiesen, daß Teilnehmerstellen über eine private Nebenstellenanlage (NST in Figur 4) mit einer Paketvermittlungsstelle in Verbindung stehen können. Auch in diesem Falle erfolgt eine Identifizierung einer rufenden Teilnehmerstelle in der bereits erläuterten Weise. Für jede der an der Nebenstellenanlage angeschlossenen Teilnehmerstellen kann dabei eine gesonderte Identifizierungsinformation gewährt werden, so daß beispielsweise eine teilnehmerstellenindividuelle Gebührenerfassung durchgeführt werden kann.

Neben der Rufnummer der rufenden Teilnehmerstelle und der Identifizierungsinformation können in einem Paket zur Einleitung eines Verbindungsaufbaus auch noch Dienste anfordernde Informationssignale übertragen werden. Für diesen Fall ist es vorteilhaft, wenn diese Informationssignale erst dann als aktuelle Parameter in die Paketvermittlungsstelle übernommen werden, wenn die das Paket abgebende rufende Teilnehmerstelle fehlerfrei identifiziert werden konnte. Damit ist beispielsweise sichergestellt, daß nur ein zugriffsberechtigter Benutzerkreis bestimmte Dienst in Anspruch nehmen kann.

Vorstehend ist zwar das Verfahren zur Identifizierung von Teilnehmerstellen lediglich am Beispiel einer rufenden Teilnehmerstelle erläutert worden. Es kann jedoch auch in bestimmten Fällen eine Identifizierung von gerufenen Teilnehmerstellen erforderlich sein, beispielsweise bei einer Gebührenübernahme durch gerufene Teilnehmer oder bei einer Zuordnung gerufener Teilnehmer zu geschlossenen Benutzerklassen. Auch für eine solche Identifizierung ist das vorstehend erläuterte Verfahren vorteilhaft anwendbar. Die für eine Identifizierung erforderlichen Informationen, nämlich Rufnummer und Identifizierungsinformation, werden in diesem Falle von der jeweiligen gerufenden Teilnehmerstelle mit der Rufbestätigung als Antwort auf einen abgehenden Ruf zu der in Frage kommenden Paketvermittlungsstelle hin übertragen.

Im übrigen können auch an die in Figur 4 dargestellten Paketvermittlungsstellen PV1 und PV2 der in Figur 1 dargestellten Bedienungsstation BS entsprechende Bedienungsstationen angeschlossen sein, über die es einem ausgewählten Personenkreis möglich ist, auf in der jeweiligen Paketvermittlungsstelle gespeicherte Dateninformationen zuzugreifen bzw. bestimmte für den Betrieb der jeweiligen Paketvermittlungsstelle erforderliche Steuerungsvorgänge zu aktivieren.

Bezugszeichenliste

BS

Bedienungsstation
BUS1,...,BUS5
Leitungssystem
CPU
Steuereinheit
DV
Durchschaltevermittlungsstelle
G11,...G1n, G2
UND-Glieder
ID
Identifizierungsanordnung
IIR
Identifizierungsinformations-Register
KR
Kennzahl-Register
LE
Ladeeingang
NST
Nebenstellenanlage
PAD
Umsetzeinrichtung
PN
Paketvermittlungsnetz
PV1, PV2
Paketvermittlungsstelle
RAM
Schreib-/Lese-Speicher
Reg
Register
ROM
Festwertspeicher
SE, SE1, SE2
Sende-/Empfangsanordnung
SVS
Signalverarbeitungssystem
SWS
Speicher
TE
periphere Einrichtung
TS1,...TS5
Teilnehmerstelle
VE
Verarbeitungseinheit
VS
Verknüpfungsschaltung

**Patentansprüche**

1. Verfahren zum Überprüfen der Berechtigung des Zugangs zu einem Signalverarbeitungssystem (SVS) von mit diesem verbundenen für die Abgabe und ggfs. auch für die Aufnahme von Signalen ausgelegten peripheren Einrichtungen (TE, BS) her anhand einer der jeweiligen peripheren Einrichtung zugewiesenen Kennzahl und einer für die jeweilige periphere Einrichtung frei wählbaren Identifizierungsinformation, **dadurch gekennzeichnet**, daß für jede der peripheren Einrichtungen (TE, BS) in dem Signalverarbeitungssystem ein Schüsselwort hinterlegt wird, welches jeweils aus der genannten Kennzahl und der Identifizierungsinformation der jeweiligen peripheren Einrichtung abgeleitet wird,

und daß bei einem beabsichtigen Zugang von einer der peripheren Einrichtungen her zunächst die von dieser dafür abgegebene Kennzahl und die dieser zugehörige Identifizierungsinformation mit dem der betreffenden peripheren Einrichtung zugeordneten Schlüsselwort verknüpft werden.

2. Anwendung des Verfahrens nach Anspruch 1 zum Überprüfen der Berechtigung eines Zugriffs von einer Bedienungsstation (BS) eines Signalverarbeitungssystems (SVS) aus auf in diesem gespeicherte Dateninformationen, **dadurch gekennzeichnet**, daß vor einem Zugriff auf solche Dateninformationen die Zugriffsberechtigung anhand einer der betreffenden Bedienungsstation (BS) zugeteilten Kennzahl, einer für die betreffende Bedienungsstation frei wählbaren Indentifizierungsinformation und eines in dem Signalverarbeitungssystem (SVS) für die betreffende Bedienungsstation hinterlegten Schlüsselwortes überprüft wird.

3. Anwendung des Verfahrens nach Anspruch 1 zum Überprüfen der Berechtigung der Aktivierung von den Betrieb eines Signalverarbeitungssystems (SVS) betreffenden Steuerungsabläufen von einer Bedienungsstation (BS) dieses Signalverarbeitungssystems aus, **dadurch gekennzeichnet**, daß vor einer Aktivierung von Steuerungsabläufen die Berechtigung bezüglich der betreffenden Bedienungsstation (BS) anhand dieser zugeteilten Kennzahl, einer für die betreffende Bedienungsstation frei wählbaren Identifizierungsinformation und eines in dem Signalverarbeitungssystem ( SVS) für die betreffende Bedienungsstation hinterlegten Schlüsselwortes überprüft wird.

4. Verfahren nach Anspruch 1, **dadurch gekennzeichnet**, daß in die Ableitung der Schlüsselwörter und in die Überprüfung der Zugangsberechtigung zusätzlich zu den genannten Kennzahlen und Identifizierungsinformationen eine für das Signalverarbeitungssystem festgelegte Systemkennzahl einbezogen wird.

5. Verfahren nach Anspruch 1 zur Identifizierung von in über eine Paketvermittlungsstelle (z.B. PV2) eines Paketvermittlungsnetzes verlaufende Verbindungen einbezogenen rufenden und/oder gerufenen Teilnehmerstellen (TS1 bis TS5) in der betreffenden Paketvermittlungsstelle,

**dadurch gekennzeichnet**, daß für jede der mit Paketvermittlungsstelle über einen Übertragungskanal in Verbindung stehenden Teilnehmerstelle in der Paketvermittlungsstelle bei Inbetriebnahme des jeweiligen Übertragungskanals ein Schlüsselwort hinterlegt wird, welches jeweils in der Paketvermittlungsstelle aus der genannten, freiwählbaren Identifizierungsinformation und der der jeweiligen Teilnehmerstelle zugewiesenen Rufnummer abgeleitet wird,

daß im Zuge des Aufbaus einer Verbindung in dem diesen Aufbau einleitenden Paket zusätzlich zu der jeweiligen Identifizierungsinformation die der jeweiligen Teilnehmerstelle zugewiesene Rufnummer übertragen wird, und daß die übertragene Rufnummer und die zugehörige Identifizierungsinformation jeweils mit dem der jeweiligen Teilnehmerstelle zugeordneten Schlüsselwort für eine Identifizierung verknüpft werden.

6. Verfahren nach Anspruch 5, **dadurch gekennzeichnet,** daß der Aufbau einer Verbindung lediglich bei einer fehlerfreien Identifizierung der jeweiligen rufenden und/oder gerufenen Teilnehmerstelle fortgesetzt wird.

7. Verfahren nach Anspruch 5 oder 6, **dadurch gekennzeichnet**, daß bei Teilnehmerstellen, die über eine private Nebenstellenanlage (NST) mit der Paketvermittelungsstelle (PV2) in Verbindung stehen, für jede dieser Teilnehmerstellen vom Betreiber der Nebenstellenanlage eine gesonderte Identifizierungsinformation gewählt wird.

8. Verfahren nach einem der Ansprüche 5 bis 7, **dadurch gekennzeichnet**, daß in einem Paket für die Einleitung des Aufbaus einer Verbindung auch Dienste anfordernde Informationssignale übertragen werden, welche nach einer Identifizierung der jeweiligen Teilnehmerstelle als aktuelle Parameter übernommen werden.

9. Schaltungsanordnung zum Überprüfen der Berechtigung des Zugangs zu einem Signalverarbeitungssystem (SVS) mittels peripherer Einrichtungen (TE,BS) anhand einer der jeweiligen peripheren Einrichtung einerseits zugewiesenen Kennzahl und andererseits frei wählbaren Identifizierungsinformation zur Durchführung des Verfahrens nach Anspruch 1, **dadurch gekennzeichnet, daß** dem Signalverarbeitungssystem (SVS) eine Speicheranordnung (SWS) mit einer der Anzahl der peripheren Einrichtungen entsprechenden Anzahl von Speicherzellen für die Speicherung der den peripheren Einrichtungen (TE, BS) zugeordneten Schlüsselwörter zugehörig ist,
daß ein erstes Register (KR) für die Zwischenspeicherung einer von einer der peripheren Einrichtung abgegebenen Kennzahl und ein zweites Register (IIR) für die Zwischenspeicherung einer der jeweiligen Kennzahl zugehörigen Identifizierungsinformationen vorgesehen sind
und daß mit den genannten Registern (KR, IIR) und der Speicheranordnung (SWS) eine Verknüpfungsschaltung (VS) verbunden ist, welche ihr von der beiden Registern her zugeführte Kennzahlen und diesen zugehörige Identifizierungsinformationen mit den Kennzahlen jeweils entsprechenden Schlüsselwörtern verknüpft.

## Claims

1. Method for checking the authorisation of access to a signal processing system (SVS) from peripheral devices (TE, BS) connected to it and designed for outputting and possibly also accepting signals, by means of a code number assigned to the respective peripheral device and an identification information item freely selectable for the respective peripheral device, characterised in that for each of the peripheral devices (TE, BS), a keyword is stored in the signal processing system, which keyword is in each case derived from the said code number and the identification information item of the respective peripheral device, and in that, with an intended access from one of the peripheral devices, first the code number output by the latter for this purpose and its associated identification information item are logically combined with the keyword allocated to the relevant peripheral device.

2. Application of the method according to Claim 1 for checking the authorisation of an access from an operating station (BS) of a signal processing system (SVS) for data information items stored in it, characterised in that, before an access to such data information items, the access authorisation is checked by means of a code number allocated to the relevant operating station (BS), an identification information item freely selectable for the relevant operating station and a keyword stored in the signal processing system (SVS) for the relevant operating station.

3. Application of the method according to Claim 1 for checking the authorisation of the activation of control sequences relating to the operation of a signal processing system (SVS) from an operating station (BS) of this signal processing system, characterised in that, before an activation of control sequences, the authorisation is checked, with respect to the relevant operating station (BS), by means of a code number allocated to it, an identification information item freely selectable for the relevant operating station and a keyword stored in the signal processing system (SVS) for the relevant operating station.

4. Method according to Claim 1, characterised in that, in addition to the said code numbers and identification information items, a system code number defined for the signal processing system is included in the derivation of the keywords and in the checking of the access authorisation.

5. Method according to Claim 1 for identifying calling and/or called subscriber stations (TS1 to TS5), included in connections extending via a packet switching centre (for example PV2) of a packet switching network, in the relevant packet switching centre, characterised in that, for each of the subscriber stations, connected via a transmission channel to the packet switching centre, in the packet switching centre, a keyword is stored when the respective transmission channel is taken into operation, which keyword is in each case derived from the said freely selectable identification information item and the call number assigned to the respective subscriber station in the packet switching centre, in that, during the setting-up of a connection, the call number assigned to the respective subscriber station is transmitted in addition to the respective identification information item in the packet initiating this setting-up, and in that the transmitted call number and the associated identification information item are in each case logically combined with the keyword allocated to the respective subscriber station for an identification.

6. Method according to Claim 5, characterised in that the setting-up of a connection is only continued with an error-free identification of the respective calling and/or called subscriber station.

7. Method according to Claim 5 or 6, characterised in that in the case of subscriber stations which are connected to the packet switching centre (PV2) via a private branch exchange (NST), a separate identification information item is selected by the operator of the branch exchange for each of these subscriber stations.

8. Method according to one of Claims 5 to 7, characterised in that in a packet for the initiation of the setting-up of a connection, information signals requesting services are also transmitted which are transferred as current parameters after an identification of the respective subscriber station.

9. Circuit arrangement for checking the authorisation of access to a signal processing system (SVS) by means of peripheral devices (TE, BS), using a code number assigned to the respective peripheral device, on the one hand, and, on the other hand, freely selectable identification information for carrying out the method according to Claim 1, characterised in that a storage arrangement (SWS) having a number of storage cells corresponding to the number of peripheral devices for storing the keywords allocated to the peripheral devices (TE, BS) belongs to the signal processing system (SVS), in that a first register (KR) for temporarily storing a code number output by one of the peripheral devices and a second register (IIR) for temporarily storing one of the identification information items belonging to the respective code number are provided, and in that a logic circuit (VS) is connected to the said registers (KR, IIR) and the storage arrangement (SWS), which logically combines code numbers and their associated identification information items supplied to it from the two registers with keywords in each case corresponding to the code numbers.

**Revendications**

1. Procédé pour contrôler l'autorisation d'accès à un système (SVS) de traitement de signaux à partir de dispositifs périphériques (TE,BS), reliés à ce système et agencés pour délivrer ou même éventuellement recevoir des signaux, sur la base d'un nombre caractéristique affecté à l'un des dispositifs périphériques respectifs, et d'une information d'identification pouvant être choisie librement pour le dispositif périphérique respectif, caractérisé par le fait que pour chacun des dispositifs périphériques (TE,BS), dans le système de traitement de signaux est mémorisé un mot-clé, qui est tiré respectivement du nombre caractéristique indiqué et de l'information d'identification du dispositif périphérique respectif, et

que, dans le cas d'un accès envisagé à partir de l'un des dispositifs périphériques, le nombre caractéristique délivré à cet effet par ce dispositif et l'information d'identification associée à ce dispositif sont combinés au mot-clé associé au dispositif périphérique considéré.

2. Application du procédé suivant la revendication 1 au contrôle de l'autorisation d'accès à partir d'un poste de service (BS) d'un système (SVS) de traitement de signaux, à des informations de données mémorisées dans ce système, caractérisée par le fait qu'avant un accès à de telles informations de données, l'autorisation d'accès est contrôlée sur la base d'un nombre caractéristique affecté au poste de commande considéré (BS), d'une information d'identification pouvant être librement sélectionnée pour le poste de commande considéré, et d'un mot-clé mémorisé dans le système (SBS) de traitement de signaux pour le poste de commande considéré.

3. Application du procédé suivant la revendication 1 au contrôle de l'autorisation d'activation de cycles de commande concernant le fonctionnement d'un système (SVS) de traitement de signaux, à partir d'un poste de commande (BS) de ce système de traitement de signaux, caractérisée par le fait qu'avant une activation de cycles de commande, l'autorisation en rapport avec le poste de commande concerné (BS) est contrôlée sur la base d'un nombre caractéristique affecté à ce poste, d'une information d'identification pouvant être librement choisie pour le poste de commande considéré et d'un mot-clé mémorisé dans le système (SVS) de traitement de signaux pour le poste de commande considéré.

4. Procédé suivant la revendication 1, caractérisé par le fait que, lors de l'obtention des mots-clés et du contrôle de l'autorisation d'accès, on introduit, en plus desdits nombres caractéristiques et desdites informations d'identification, un nombre caractéristique du système, qui est fixé pour le système de traitement de signaux.

5. Procédé suivant la revendication 1 pour identifier des postes d'abonnés appelants et/ou appelés (TS1 à TS5), impliqués dans des communications passant par un central de commutation de paquets (par exemple PV2) d'un réseau de commutation de paquets, dans le central considéré de commutation de paquets, caractérisé par le fait que, pour chaque poste d'abonné raccordé au central de commutation de paquets par l'intermédiaire d'un canal de transmission, dans le central de commutation de paquets est mémorisé, lors de la mise en service du canal de transmission respectif, un mot-clé qui est obtenu, respectivement dans le central de commutation de paquets, à partir de ladite information d'identification pouvant être librement choisie et du numéro d'appel affecté au poste d'abonné respectif,

qu'au cours de l'établissement d'une communication dans le paquet déclenchant cet établissement d'une communication, le numéro d'appel affecté au poste d'abonné respectif est transmis en supplément de l'information respective d'identification, et que le numéro d'appel transmis et l'information d'identification associée sont combinés respectivement au mot-clé associé au poste d'abonné respectif, pour une identification.

6. Procédé suivant la revendication 5, caractérisé par le fait que l'établissement d'une communication se poursuit uniquement lors d'une identification sans erreur du poste d'abonné appelant et/ou appelé respectif.

7. Procédé suivant la revendication 5 ou 6, caractérisé par le fait que dans le cas de postes d'abonnés qui sont reliés au central (PV2) de commutation de paquets par l'intermédiaire d'une installation privée à postes supplémentaires (NST), une information particulière d'identification est sélectionnée par l'utilisateur de l'installation à postes supplémentaires, pour chacun de ces postes d'abonnés.

8. Procédé suivant l'une des revendications 5 à 7, caractérisé par le fait que dans un paquet pour le déclenchement de l'établissement d'une commutation sont également transmis, des signaux d'informations demandant des services et transférés en tant que paramètres actuels après une identification du poste d'abonné respectif.

9. Montage pour contrôler l'autorisation d'accès à un système (SVS) de traitement de signaux à l'aide de dispositifs périphériques (TE,BS) d'une part sur la base d'un nombre caractéristique affecté au dispositif périphérique respectif et d'autre part sur la base d'une information d'identification pouvant être choisie librement pour la mise en oeuvre du procédé suivant la revendication 1, caractérisé par le fait qu'au système (SVS) de traitement de signaux est associé un dispositif de mémoire (SWS) comportant un nombre, qui correspond au nombre des dispositifs périphériques, de cellules de mémoire pour la mémorisation des mots-clés associés aux dispositifs périphériques (TE,BS), qu'il est prévu un premier registre (KR) pour la mémorisation temporaire d'un nombre caractéristique délivré par l'un des dispositifs périphériques, et un second registre (IIR) pour la mémorisation temporaire de l'une des informations d'identification associées au nombre caractéristique respectif, et

qu'auxdits registres (KR,IIR) et au dispositif de mémoire (SWS) est raccordé un circuit combinatoire (VS), qui combine les nombres caractéristiques et des informations d'identification associées à ces registres qui lui sont envoyés à partir de ces deux registres de mots-clés respectifs correspondants aux nombres caractéristiques.

# FIG 1

# FIG 2

von SE

BUS 1

BUS 2

KR

LE

BUS 3

SWS

IIR

BUS 4

Reg

VS

BUS 5

ID

zu SE

# FIG 3

# FIG 4

EP 0 203 424 B1